# EUROPÄISCHE PATENTSCHRIFT

(11) **EP 3 616 913 B1**
(45) Veröffentlichungstag und Bekanntmachung des Hinweises auf die Patenterteilung: **07.10.2020**
(21) Anmeldenummer: 18191532.3
(22) Anmeldetag: 29.08.2018
(51) Int. Cl.: B32B 33/00, B05D 1/00, E04F 15/10, B32B 5/00, B32B 29/00, B44C 5/04

(54) **WASSERFESTER FUSSBODEN**
WATERPROOF FLOOR
PLANCHER RÉSISTANT À L'EAU

(43) Veröffentlichungstag der Anmeldung: 04.03.2020
(73) Patentinhaber: Flooring Technologies Ltd., Kalkara SCM1001 (MT)
(72) Erfinder: BRAUN, Roger, 6130 Willisau (CH)
(74) Vertreter: Kalkoff & Partner Patentanwälte PartmbB

(56) Entgegenhaltungen:
- DE-A1-102010 045 266
- DE-A1-102012 022 461

## Beschreibung

Die Erfindung betrifft ein Verfahren zum Herstellen eines wasserfesten Fußbodenpaneels und ein wasserfestes Fußbodenpaneel.

Fußbodenpaneele sind aus dem Stand der Technik seit Jahren bekannt. Diese umfassen üblicherweise eine Trägerplatte mit einer Dekorbeschichtung. Die Dekorbeschichtung weist ein Farbdekor und gegebenenfalls auch ein Strukturdekor auf. Zum Verbinden der Paneele sind beispielsweise Verriegelungsprofile, wie Dreh-Schwenkprofile, Clickprofile oder Druckknopfprofile bekannt.

Ein solches Fußbodenpaneel mit einer Trägerplatte und einem Dekorpapier ist beispielsweise aus der Druckschrift DE 10 2012 022 461 A1 bekannt. Sie betrifft das Problem der Herstellung eines zum Farbdekor passenden Strukturdekors, was aufgrund der Quellung des Dekorpapiers beim Tränken mit einer Harzlösung schwierig ist. Ein weiteres Fußbodenpaneel ist beispielsweise aus der DE 10 2010 045 266 A1 bekannt, das unter anderem aufgrund der Verwendung einer Vliesschicht aus Glasvlies oder Polyester anstelle eines Dekorpapiers eine gegen mechanische Abnutzung besonders geschützte Oberfläche aufweist, die zudem ein sehr hochwertiges Druckbild des Dekors aufweist.

Schwierig ist die Verwendung der bekannten Paneele in Feuchträumen, wie beispielsweise Badezimmern oder Kellern, da die Trägerplatten häufig aus Holzwerkstoffen hergestellt sind und diese bei Einwirkung von Feuchtigkeit quellen, wodurch sowohl die Form als auch die Festigkeit der Platten verloren geht.

Hierfür gibt es verschiedene Lösungsansätze, wie beispielsweise die Vergütung der verwendeten Holzpartikel bzw. der Kanten und Oberflächen der Holzwerkstoffplatten, damit eine Feuchtigkeitsaufnahme zumindest behindert wird. Auch werden beispielsweise Trägerplatten aus WPC (Wood-Plastic-Composite) oder anderen wenig hygrosko pischen Materialien verwendet, die von sich aus eine geringere Feuchtigkeitsaufnahme aufweisen.

Die bekannten Lösungsansätze haben unterschiedliche Nachteile. So ist häufig eine langfristige vollständige Wasserfestigkeit der Trägerplatten oder der Oberflächenbeschichtungen nicht gegeben. Auch sind einige Trägerplatten, wie beispielsweise WPC-Platten nur schwierig beschichtbar, sodass gerade Beschichtungen mit hochwertigen Dekoren bzw. der direkte Aufdruck von hochwertigen Dekoren bisher nicht möglich oder extrem aufwendig und teuer sind. Dekoroberflächen aus Vinyl weisen dagegen ein schlechtes Image bei den Kunden auf und sind daher schwer bzw. nur sehr günstig verkäuflich. Verschiedene Trägermaterialien, wie beispielsweise zementbasierte Trägerplatten, sind zudem nur mittels entsprechend aufwendiger Modifikationen dazu geeignet, mit korrespondierenden Verriegelungsprofilen an den Seitenkanten für eine komfortable Verlegung der Trägerplatten ausgestattet zu werden.

Der Erfindung liegt somit die Aufgabe zugrunde ein Verfahren zum Herstellen eines wasserfesten Fußbodenpaneels sowie ein entsprechendes Fußbodenpaneel bereitzustellen, das dauerhaft wasserfest ist und die Nachteile aus dem Stand der Technik überwindet.

Die Erfindung löst die Aufgabe durch ein Verfahren mit den Merkmalen des Anspruchs 1 und einem Fußbodenpaneel mit den Merkmalen des Anspruchs 9. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung.

Das erfindungsgemäße Verfahren zum Herstellen eines wasserfesten Fußbodenpaneels mit einer wasserfesten Trägerplatte und einer auf der Trägerplatte angeordneten Oberflächenbeschichtung umfasst die Schritte: Verkleben einer vorimprägnierten, als Finishfolie ausgebildeten Dekorschicht auf der Trägerplatte, Füllen der Finishfolie mit einem Fülllack und anschließendes Trocknen des Lacks, Grundieren der Finishfolie durch Auftragen eines lösemittelhaltigen Grundierlacks und nachfolgendes Angelieren des Grundierlacks, Auftragen und Angelieren einer lösemittelhaltigen Decklackschicht auf den Grundierlack und das vollständige Aushärten des Grundierlacks und des Decklacks.

Das erfindungsgemäße Verfahren ermöglicht in vorteilhafter Weise das Herstellen eines vollständig wasserfesten Fußbodenpaneels, im Weiteren auch nur Paneel genannt. Dies wird zum einen durch das Bereitstellen der vollständig wasserdichten Trägerplatte und zum anderen durch die ungewöhnliche Erzeugung der ebenfalls wasserfesten Oberflächenbeschichtung erreicht. Dabei bewirkt insbesondere die Verwendung einer Finishfolie, die lediglich vorimprägniert ist und erst nach dem Aufkleben auf die Trägerplatte vollständig gefüllt und mit der Grundierschicht und Decklackschicht beschichtet wird, eine vollständige Wasserfestigkeit der Oberflächenbeschichtung auf der Trägerplatte. Zudem weist das Paneel den Vorteil auf, dass ein hochauflösendes naturgetreues Dekorbild erzeugt werden kann, dass es keine Weichmacher wie beispielsweise Paneele mit einer Oberfläche aus Vinyl aufweist und zum Anordnen von üblichen Verriegelungsprofilen geeignet ist.

Zur Oberflächenbeschichtung gehören demnach neben der Finishfolie auch die Schutzschichten (Grundierlackschicht und Decklackschicht).

Unter einer Finishfolie kann ein Dekorpapier verstanden werden, das mit einem Farbdekor bedruckt ist. Die Finishfolie kann somit beim Verkleben bahnenförmig oder blattförmig ausgebildet sein. Das Dekorpapier der Finishfolie weist bereits vor dem Verkleben, insbesondere auch vor dem Vorimprägnieren, ein aufgedrucktes Farbdekor auf. Das Farbdekor kann insbesondere ein Holzdekor, Fliesendekor, Steindekor oder Fantasiedekor zeigen. Selbstverständlich können die Farbdekore auch Bilder von Gegenständen, Landschaften, Lebewesen, Gebäuden usw. darstellen.

Die aufzuklebende Finishfolie ist als Vorimprägnat ausgebildet, d.h., sie umfasst einen Füllstoff (Imprägniermittel), mit welchem das Dekorpapier der Finishfolie teilweise gefüllt ist. Aufgrund der Vorimprägnierung der Finishfolie sind sowohl die Fasern des Dekorpapieres (sofern sie imprägnierbar sind) als auch die Zwischenräume zwischen den Fasern zum Teil gefüllt. Die vorimprägnierte Finishfolie ist nicht vollständig gesättigt, sondern weiterhin in der Lage, eine Flüssigkeit in die Fasern und/oder Zwischenräume aufzunehmen.

Das zum Vorimprägnieren verwendete Imprägniermittel ist insbesondere transparent ausgebildet, sodass das aufgedruckte Farbdekor unbeeinträchtigt sichtbar bleibt. Die Vorimprägnierung erfolgt insbesondere durch ein Kunstharz, vorzugsweise durch Melamin. Dabei ist das Kunstharz gleichmäßig in der Finishfolie verteilt und bewirkt eine erste Verminderung der Wasseraufnahmefähigkeit. Vorzugsweise liegt das Kunstharz bereits vor dem Verkleben mit der Trägerplatte in der Finishfolie vollständig ausgehärtet vor. Mittels des nachträglichen Füllens der Finishfolie werden die weiterhin ungefüllten Zwischenräume zwischen den Fasern und ggf. auch die noch aufnahmefähigen Fasern gefüllt. Neben der Beschränkung der Flüssigkeitsaufnahmefähigkeit wird durch das nachträgliche Füllen die Struktur der Finishfolie so stark verfestigt, dass erst mit diesem nachträglichen Füllen die Spaltfestigkeit der Finishfolie ausreichend hoch ist, um korrespondierende Verriegelungsprofile in hoher Qualität an die Seitenkanten des Paneels anordnen zu können.

Unter korrespondierenden Verriegelungsprofilen werden Profilierungen verstanden, die zum Verbinden von zwei Paneelen ausgebildet sind. Dabei korrespondiert die Profilierung einer Seitenkante eines ersten Paneels mit der Profilierung an einer Seitenkante eines zweiten Paneels. Im verriegelten Zustand, d.h., sobald zwei korrespondierende Verriegelungsprofile miteinander verbunden sind, verhindern sie ein Auseinandergehen der Paneele sowohl in Horizontalrichtung, d. h. in Flächenebene als auch in Vertikalrichtung, d. h. senkrecht zur Oberfläche der Paneele, sodass bei einer Paneelfläche aus mehreren Paneelen weder Lücken noch Absätze zwischen den Paneelen entstehen können. Die korrespondierenden Verriegelungsprofile können insbesondere als Dreh-Schwenkprofile, Druckknopfprofile oder Clickprofile ausgebildet sein.

Unter einer wasserfesten Trägerplatte wird eine Trägerplatte verstanden, die auch unter dem Einfluss von Feuchtigkeit oder Nässe über Jahre keine nennenswerte Wasseraufnahme (wasserdicht) und insbesondere keine Quellung erfährt. Insofern wird mit einer wasserfesten Trägerplatte sowohl verhindert, dass sich Schimmel im Bereich der Trägerplatte bildet als auch, dass eine Quellung der Platte erfolgt, die bspw. die Dimension oder die Festigkeit der Platte verändert.

Auch die wasserfeste Oberflächenbeschichtung (Finishfolie, Fülllack, Grundierlack, Decklackschicht/en) und das zum Auftragen verwendeten Klebemittel erfahren unter Langzeiteinwirkung von Feuchtigkeit oder Nässe keine nennenswerte Wasseraufnahme und insbesondere keine Quellung.

Die Wasserfestigkeit der Oberflächenbeschichtung wird insbesondere über die Füllung des Vorimprägnates nach dem Verkleben und dem Auftragen der Schutzschichten (Grundierlackschicht und Decklackschicht) erreicht, da hierdurch die eigentlich als quellfähig anzusehende Finishfolie vollständig vor der Aufnahme von Feuchtigkeit geschützt wird.

Unter dem Verkleben wir eine dauerhafte Befestigung der Finishfolie auf der Oberfläche der Trägerplatte verstanden, die sofern sie nicht auf den Bereich des Schmelzpunktes des Heizklebers erwärmt wird, nicht zerstörungsfrei abgelöst werden kann.

Das Füllen erfolgt mit einem Fülllack, der besonders gut in die Finishfolie eindringt und die Zwischenräume zwischen den Fasern und die ggf. noch nicht vollständig gesättigten Fasern füllt. Der Fülllack wird nach dem Aufkleben der Finishfolie auf die Trägerplatte auf die Finishfolie aufgebracht und dringt in die vorimprägnierte Finishfolie ein. Der Auftrag erfolgt vorzugsweise mittels einer Sprühvorrichtung, kann alternativ aber auch mittels einer Auftragswalze durchgeführt werden. Anschließend erfolgt eine Trocknung und ggf. vollständige Aushärtung des Fülllacks.

Wie beim Fülllack erfolgt auch der Auftrag des Grundierlacks und des Decklacks vorzugsweise mittels einer Sprühvorrichtung, kann alternativ aber auch beispielsweise mittels einer Auftragswalze durchgeführt werden. Nach dem Auftrag der Schicht aus Grundierlack wird diese angeliert, d. h., sie wird vorgetrocknet, sodass sie nicht mehr verlaufen kann, jedoch nicht vollständig ausgehärtet ist. Anschließend wird auf die angelierte Schicht aus Grundierlack die Decklackschicht aufgetragen.

Nach dem Auftragen der Decklackschicht werden sowohl die Grundierlackschicht als auch die Decklackschicht vollständig ausgehärtet. Gegebenenfalls erfolgt dabei auch eine vollständige Aushärtung des Fülllacks. Die Aushärtung erfolgt mittels Strahlung, Wärme und/oder UV-Licht, wobei sowohl der Grundierlack als auch der Decklack vorzugsweise als UV-Lacke ausgebildet sind.

Der Fülllack, der Grundierlack und der Lack für die Decklackschicht bzw. die Decklackschichten sind vorzugsweise zumindest teilweise transparent ausgebildet, um die Sichtbarkeit des Farbdekors zu ermöglichen.

Die Trägerplatte umfasst ein Gemisch aus Kunststofffasern und Armierungsfasern, insbesondere Polypropylenfasern und Glasfasern. Dabei ist die Trägerplatte als nachverdichtete Platte ausgebildet.

Zum Herstellen der Trägerplatte können bspw. Kunststofffasern und/oder Armierungsfasern aufgespalten und zu Wolle verarbeitet werden, woraus ein Wollekuchen hergestellt wird. Von diesen werden mehrere Lagen übereinandergeschichtet und über einen Nagelstuhl geführt, wodurch eine Neuorientierung der Fasern erfolgt. Anschließend erfolgt ein Verpressen des Wollekuchens unter Einwirkung von Druck und Wärme, im Weiteren auch Verbacken genannt. Dabei wird der Wollekuchen verdichtet und die Kunststofffasern schmelzen an bzw. vollständig auf. Mit dem Abkühlen verkleben die Kunststofffasern untereinander und mit den Armierungsfasern, wodurch eine Trägerplatte entsteht, die zum einfachen Verlegen eine ausreichende Steifigkeit aufweist. Dabei entspricht die Biegefestigkeit und die Druckfestigkeit der Trägerplatte weitestgehend der Biegefestigkeit und die Druckfestigkeit einer weichen MDF-Platte (Dichte ca. 400kg/m3 bis 600 kg/m3) und ihre Steifigkeit ist deutlich höher als bspw. bei üblichen reinen PVC-Fußbodenbelagsplatten, die beim Verlegen über die Längsachse verbiegen.

Optional können an den Außenseiten Kunststofffilme angeordnet werden, die vorzugsweise aus dem gleichen Kunststoffmaterial wie die Kunststofffasern bestehen und mit Verbacken werden. Hierdurch wird eine besonders ebene Oberfläche erzeugt. Zusätzliche Klebemittel werden vorzugsweis nicht verwendet.

Beim Verpressen der Ausgangsmatte der Trägerplatte aus Wollekuchen wird diese verdichtet. Die Verdichtung liegt insbesondere im Bereich zwischen 30 % und 60 %. So wird beispielsweise eine Ausgangsmatte, die vor dem Verbacken eine Stärke von ca. 7,9 mm aufweist, auf eine Stärke von 4,5 mm nach dem Abkühlen verdichtet.

Die fertige Trägerplatte weist vorzugsweise eine Dichte von ca. 500 Kg/m³ bis 700 kg/m³, besonders bevorzugt ca. 600 Kg/m³ +/- 30Kg/m³ auf.

Bei den Trägerplatten ist das Verhältnis aus Kunststoffpartikeln (insbesondere Polypropylenfasern) zu den Armierungsfasern (insbesondere Glasfasern) insbesondere mindestens 1,5:1, vorzugsweise mindestens 2:1, besonders bevorzugt mindestens 3:1 und vorteilhafterweise höher als 4:1. Die Armierungsfasern haben dabei vorrangig den Zweck, die Stabilität der Platte zu verbessern und werden in einem entsprechend geringen Maß eingesetzt. Der Hauptbestandteil der Platte sind die Kunststofffasern.

Um die Dauerhaftigkeit der Wasserfestigkeit zu garantieren, werden erfindungsgemäß für die Grundierlackschicht und die Decklackschicht lösemittelhaltige UV-Lacke verwendet. Unter lösemittelhaltigen Lacken werden Lacke verstanden, deren Lösemittel nicht auf Wasser basiert. Vorzugsweise werden Lacke verwendet, deren Lösemittel auf Basis von Butylacetat beruhen.

Die Verwendung von Lacken, deren Lösemittel nicht auf Wasser basieren, garantiert eine besonders hohe Sicherheit gegen das Eindringen von Feuchtigkeit über die Oberfläche. Zudem verbessern die verwendeten lösemittelhaltigen Lacke die Chemikalienbeständigkeit und die allgemeine mechanische Belastbarkeit.

Zudem weisen auf Butylacetat basierende Lacke den Vorteil auf, dass sie besonders kostengünstig sind und im ausgehärteten Zustand ohne weitere Zusatzstoffe eine ausreichend hohe Abriebfestigkeit aufweisen. Auch bilden auf Butylacetat basierende Lacke eine nicht spröde, sondern gefühlt elastische Oberfläche aus, die vom Nutzer als weiche Oberfläche wahrgenommen wird.

Sowohl die Grundierlackschicht als auch die (erste) Decklackschicht werden vorzugsweise vollflächig aufgetragen, um die Oberfläche bestmöglich zu schützen.

Nach einer Weiterbildung der Erfindung ist vorgesehen, dass vor dem vollständigen Aushärten eine ein Strukturdekor ausbildende weitere Decklackschicht auf die vorhandene Decklackschicht aufgetragen wird.

Diese weitere Decklackschicht, im Weiteren auch zweite Decklackschicht genannt, wird somit auf die bereits vorhandene Decklackschicht, im Weiteren auch erste Decklackschicht genannt, aufgetragen. Der Auftrag kann entsprechend der ersten Decklackschicht vorzugsweise mittels einer Auftragswalze, alternativ bspw. auch mit einer digitalen Druckvorrichtung erfolgen. Beim Lack für die zweite Decklackschicht wird zudem vorzugsweise der gleiche Lack wie zur Erzeugung der ersten Decklackschicht verwendet.

Während die erste Decklackschicht vollflächig und zwischen 8 g/m² bis 40 g/m², besonders bevorzugt zwischen 10 g/m² bis 30 g/m² und vorteilhafterweise 23 g/m² +/-2,5 g/m² aufgetragen wird, erfolgt der Auftrag bei der zweiten Decklackschicht vorzugsweise mit 0,5 g/m² bis 4 g/m², bevorzugt 1,5 g/m² +/-0,5 g/m². D. h., die zweite Decklackschicht ist gegenüber der ersten Decklackschicht deutlich dünner. Um das Strukturdekor auszubilden, wird die zweite Decklackschicht zudem nur abschnittsweise auf die erste Decklackschicht aufgetragen. Dabei können die Strukturen entweder als Erhebungen auf die erste Decklackschicht aufgetragen werden oder es entstehen Vertiefungen in der zweiten Decklackschicht bzw. Abschnitte, die die Strukturen darstellen. Grundsätzlich kann dabei die zweite Decklackschicht in unterschiedlichen Dicken oder auch auf Abschnitte der ersten Decklackschicht gar nicht aufgetragen werden. Hierdurch entsteht eine haptische Struktur durch die zweite Decklackschicht.

Die Strukturen sind vorzugsweise auf das Farbdekor abgestimmt und können beispielsweise die Poren eines Holzdekors, die Fugen zwischen Fliesen, Ausnehmungen in einem Steindekor o. ä. darstellen. Dabei ist das Strukturdekor insbesondere als sogenannte Synchronpore ausgebildet.

Zum Verkleben der Finishfolie mit der Oberfläche der Trägerplatte wird besonders bevorzugt ein Heißkleber verwendet. Der Heißkleber garantiert eine dauerhaft wasserfeste Verbindung zwischen der Finishfolie und der Trägerplatte. Als Heizkleber wird insbesondere ein PUR-Hotmelt eingesetzt, da durch dieses eine zusätzliche elastische Schicht zwischen der Finishfolie und der Trägerplatte entsteht, welche die Belastbarkeit der Oberfläche insbesondere auf Stoßbeanspruchung verbessert. Zudem bildet das PUR-Hotmelt eine wasserfeste Schicht aus und ist besonders gut industriell verarbeitbar, unter anderem aufgrund einer kurzen offenen Zeit.

Zudem ermöglicht der Heizkleber ein besonders bevorzugtes Verkleben der Finishfolie mit der Trägerplatte auf einer Kaschieranlage, wodurch die Finishfolie auch besonders einfach und kostengünstig als Finishfolienbahn auf einer Rolle verwendet werden kann. Um die Verklebung zwischen der Finishfolie und der Trägerplatte weiter zu verbessern, insbesondere besonders langfristig wasserfest auszugestalten, werden vorzugsweise zum Aufkaschieren (Verkleben) der Finishfolie auf der Trägerplatte zwischen 50g/qm bis 90g/qm Heizkleber aufgetragen. Der von der Kaschieranlage ausgeübte Druck beim Aufkaschieren der Finishfolie auf die Trägerplatte beträgt zudem vorzugsweise zwischen 30N/mm bis 100N/mm und erfolgt linear und kontinuierlich.

Nach einer Weiterbildung der Erfindung wird eine Finishfolie verwendet, die mit einem Kunstharz, insbesondere einem Melaminharz vorimprägniert ist, wobei die Kunstharzfüllung insbesondere zwischen 10 Gew.-% und 30 Gew.-%, insbesondere 25 Gew.-% +/-2,5 Gew.-% der vorimprägnierten Finishfolie beträgt.

Die relativ geringe Menge an Kunstharz zur Vorimprägnierung des Dekorpapieres reicht aus, um eine ausreichende Festigkeit zur weiteren Verarbeitung der Finishfolie zu erzeugen. Zudem bleibt die Finishfolie elastisch, sodass sie als Rollenware verarbeitbar ist. Die eingesetzte vorimprägnierte Finishfolie weist beim Aufkleben auf die Trägerplatte keine weitere Beschichtung auf, sondern muss beispielsweise zum Erreichen einer ausreichenden Spaltfestigkeit für Verriegelungsprofile nach dem Verkleben der Trägerplatte vollständig gefüllt werden. Melamin wird in vorteilhafter Weise verwendet, da dieses eine hohe Transparenz im vollständig ausgehärteten Zustand aufweist, sodass das Farbdekor der Finishfolie weiterhin gut sichtbar ist. Vorzugsweise weist die vorimprägnierte Finishfolie vor dem Aufkleben und bei einem Kunstharzanteil von 25 Gew.-% +/-5 Gew.-% ein Flächengewicht von ca. 65 g/m² +/- 6,5 g/m² auf.

Während das Lösemittel des Grundierlacks und des Decklacks vorzugsweise nicht auf Basis von Wasser ausgebildet ist, wird nach der Erfindung als Fülllack ein wasserbasierter UV-Lack verwendet. D.h., dass das Lösemittel des Lacks Wasser ist. Dieser ist zur Herstellung der Wasserfestigkeit ausreichend, jedoch besonders gut dazu geeignet, in die Finishfolie einzudringen und die Zwischenräume zwischen den Fasern bzw. die Fasern selbst zu tränken. Zudem kann der in die Finishfolie eingedrungene Fülllack auf Basis von Wasser besonders einfach und leicht vollständig getrocknet und ausgehärtet werden.

Zudem wird über die gewählte Beschichtungskombination und Lackkombination aus Grundierlack und Decklackschicht mit Fülllack und einer mit Kunstharz vorimprägnierten Finishfolie eine Oberfläche erzeugt, die eine ausreichend hohe Abriebfestigkeit für Fußbodenpaneele aufweist, jedoch ohne die üblichen Mittel zum Steigern der Abriebfestigkeit, wie beispielsweise Korund, Glas o. ä. auskommt und trotzdem alle Anforderungen der Norm EN 16511 Nutzungsklasse 31 erfüllt.

Um neben der Wasserfestigkeit auch weiterhin eine entsprechende Schallabsorption zu erreichen, ist nach einer Weiterbildung der Erfindung vorgesehen, dass auf der der Oberflächenbeschichtung gegenüberliegenden Oberfläche (Rückseite) der Trägerplatte eine Trittschalldämmung aufgeklebt wird, wobei diese insbesondere aufkaschiert wird. Dabei wird die Trittschalldämmung besonders bevorzugt gleichzeitig mit der Oberflächenbeschichtung auf die gegenüberliegende Seite der Oberflächenbeschichtung aufkaschiert. Zum Aufkaschieren der Trittschalldämmung wird ebenfalls vorzugsweise ein Heißkleber, beispielsweise der gleiche Heißkleber wie zum Aufkaschieren der Finishfolie verwendet. Für die Trittschalldämmung kann ein wasserabweisendes Biopolymer verwendet werden. Dieses umfasst Cellulose und einen hohen Anteil Lignin, wodurch die wasserabweisende Wirkung erzeugt wird. Derartige Biopolymere sind bspw. als Untersetzer von Getränkegläsern bekannt.

Ein besonderer Vorteil des Biopolymers ist, dass dieses ebenfalls keine Phthalate enthält. Die wasserabweisende Ausbildung und die Positionierung auf der Unterseite der Trägerplatte reichen dabei aus, um im verlegten Zustand weiterhin einen wasserfesten Fußbodenbelag bereitzustellen.

Weiter wird die Aufgabe der Erfindung gelöst mittels eines Fußbodenpaneels mit einer Trägerplatte, die ein verdichtetes Polypropylenfaser-Glasfaser-Gemisch aufweist, einer mit der Trägerplatte verklebte Oberflächenbeschichtung auf einer Sichtseite, wobei die Oberflächenbeschichtung mittels eines Heizklebers mit der Trägerplatte verklebt ist, wobei die Oberflächenbeschichtung ein als Finishfolie ausgebildetes Dekorpapier mit einem aufgedruckten Farbdekor und einer teilweisen Kunstharzfüllung und einer teilweisen Lackfüllung umfasst und auf der gefüllten Finishfolie eine Grundierlackschicht und eine Decklackschicht angeordnet sind.

Insbesondere die Kombination aus der Oberflächenbeschichtung mit der zweifach gefüllten Finishfolie, der Grundierlackschicht und der Decklackschicht, die beide auf Lösemittelbasis sind und der von sich aus wasserfesten Trägerplatte erzeugen ein dauerhaft wasserfestes Paneel, das unter Einwirkung von Wasser und Feuchtigkeit weder Feuchtigkeit aufnimmt, noch quillt oder biologisch abgebaut wird.

Zu den einzelnen Merkmalen des erfindungsgemäßen Fußbodenpaneels wird auf die Ausführungen zum Verfahren verwiesen.

Gemäß einer Weiterbildung der Erfindung ist auf der Decklackschicht eine weitere zweite Decklackschicht zumindest abschnittsweise angeordnet, wobei die zweite Decklackschicht ein Strukturdekor, insbesondere ein synchron zum Farbdekor ausgebildetes Strukturdekor, ausbildet. Besonders bevorzugt erfolgt der Auftrag in der zweiten Decklackschicht mit einer Auftragsmenge von 1,5g/qm +/-0,5 g/m², wobei die zweite Decklackschicht insbesondere nicht vollflächig, sondern nur abschnittsweise auf der ersten Decklackschicht angeordnet ist.

Die zweite Decklackschicht wird somit auf die Decklackschicht aufgetragen, die auf der Grundierlackschicht angeordnet ist. Dabei kann die Decklackschicht sowohl eine negative als auch eine positive Struktur ausbilden, d. h., die Decklackschicht kann entweder einzelne Erhebungen ausbilden oder weitestgehend vollflächig ausgebildet sein, sodass Vertiefungen in der Oberfläche entstehen. Insbesondere kann die Decklackschicht beispielsweise Abschnitte, die im Farbdekor als Vertiefung dargestellt sind (beispielsweise Holzporen), im Strukturdekor als Erhebung ausbilden, da von einem Benutzer aufgrund der geringen Dicke der zweiten Decklackschicht eine Erhebung nicht von einer Vertiefung unterscheidbar ist. Zu den weiteren Ausführungen der Decklackschicht wird auf die bereits oben genannten Ausführungsmerkmale verwiesen.

Wie bereits ausgeführt, kann aufgrund der speziellen Anordnung der einzelnen Schichten und der Ausführungen der Einzelakte Schichten als Lacke auf Wasserbasis bzw. als Lacke, die nicht auf Wasserbasis sind, eine besondere Abriebfestigkeit erreicht werden. Insofern ist die Oberflächenbeschichtung des Fußbodenpaneels besonders bevorzugt frei von Mitteln ausgebildet, die die Abriebfestigkeit steigern, insbesondere ohne Korund, Glas oder Sand ausgebildet.

Dabei erfüllt die Oberflächenbeschichtung weiterhin alle Bedingungen für die Nutzungsklasse 31 entsprechend der EN 16511. Insbesondere wird die Abriebbeständigkeit IP nach Verfahren B der Anforderung der NK 31 erfüllt.

Gemäß einer Weiterbildung der Erfindung ist auf der der Oberflächenbeschichtung gegenüberliegenden Oberfläche der Trägerplatte eine Trittschalldämmung angeordnet, die insbesondere ein Biopolymer umfasst. Bevorzugt weist die Trittschalldämmung eine Dicke von mindestens 0,5 mm, bevorzugt von 0,9 mm +/- 0,2 mm, besonders bevorzugt von 1,0 mm +/-0,2 mm und vorteilhafterweise von 1,8 mm +/- 0,2 mm auf. Die Dichte der Trittschalldämmung beträgt besonders vorteilhaft 384 Kg/m3 +/-5%. Die als Biopolymer ausgebildete Trittschalldämmung bewirkt auch bereits bei geringen Dicken hohe Trittschallminderungen. So weist die als Biopolymer ausgebildete Trittschalldämmung mit der oben genannten Dichte und mit einer Dicke von 0,9 mm +/-0,2 mm eine Trittschalminderung von ca.2odB und bei einer Dicke von 1,8 mm eine Trittschallminderung von ca. 22 dB, gemessen nach DIN CEN/TS 16354, auf.

Grundsätzlich könnten die Paneele auch ohne Verbindungselemente an ihren Außenkanten verwendet werden. Um jedoch die Verlegbarkeit der Paneele zu vereinfachen und um sowohl Lücken zwischen zwei Paneelen oder Absätze zwischen zwei Paneelen zu verhindern, sind nach einer Weiterbildung der Erfindung an Außenkanten des Paneels korrespondierende Verriegelungsprofile zum Verbinden von zwei Paneelen angeordnet. Unter klebemittelfreien korrespondierenden Verriegelungsprofilen werden somit Profilierungen verstanden, die ohne Klebemittel verbunden werden, ineinandergreifen, aneinander verriegeln und im verriegelten Zustand sowohl das Entstehen von Lücken zwischen zwei Paneelen als auch von Absätzen zwischen den gleichen Paneelen verhindern. Die korrespondierenden Verriegelungsprofile sind insbesondere als Dreh-Schwenkprofile, Clickprofile oder auch Druckknopfprofile ausgebildet.

Ein besonderer Vorteil der erfindungsgemäßen wasserfesten Fußbodenpaneele ist, dass diese vollständig frei von Weichmachern (Phalate) sind und aufgrund der Ausführung mit einem Dekorpapier ein hochqualitatives Dekor umfassen können, dessen Qualität durch ein Strukturdekor, welches besonders einfach synchron zum Farbdekor ausbildbar bei ist, weiter erhöht werden kann.

Zudem ist das erfindungsgemäße Fußbodenpaneel für Fußbodenheizungen geeignet, da der Wärmeleitkoeffizient entsprechend niedrig ist und aufgrund der direkten Einwirkung der Fußbodenheizung keine Form- oder Festigkeitsveränderungen des Paneels erfolgen.

Auch ist es gegenüber Paneelen die auf einem Holzwerkstoff, wie Spanplatte oder Faserplatte basieren, besonders leicht, insbesondere im Bereich von 650 kg/m³ bis 800 kg/m³, vorzugsweise im Bereich von 700 kg/m³ +/- 50 kg/m³, weist jedoch gegenüber beispielsweise reinen Vinylpaneelen eine deutlich höhere Steifigkeit auf, die vergleichbar ist, mit gleich dicken HDF- oder Spanpaneelen, sodass die Montage besonders einfach und ähnlich von bekannten Paneelen auf Holzwerkstoffbasis durchgeführt werden kann.

Eine weitere Besonderheit der erfindungsgemäßen Fußbodenpaneele ist, dass sie aufgrund der besonderen Oberflächenbeschichtung und des besonders Ablaufs der Oberflächenbeschichtung ohne Gegenzug ausführbar sind, da trotz der einseitigen Beschichtung kein wesentliches Verziehen der Fußbodenpaneele erfolgt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Details oder Merkmals einer entsprechenden Vorrichtung dar.

Im Weitern wird die Erfindung anhand eines Ausführungsbeispiels näher beschrieben. Es zeigt:

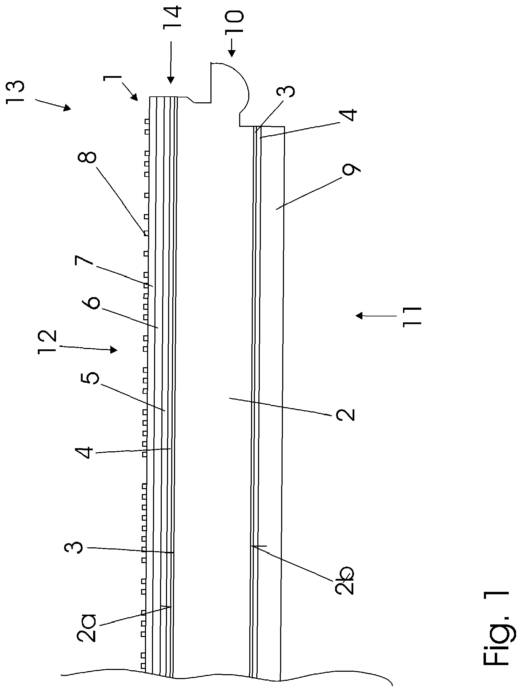

- Fig. 1: schematisch in einem Querschnitt ein wasserfestes Fußbodenpaneel mit einer Trägerplatte und einer Oberflächenbeschichtung.

Figur 1 zeigt ein Paneel 1, das als Fußbodenpaneel eingesetzt werden kann. Das Paneel 1 weist eine Trägerplatte 2 auf, die wasserfest ausgebildet ist. Die hier dargestellte Trägerplatte 2 umfasst ein Fasergemisch aus Kunststofffasern, hier Polypropylenfasern und Glasfasern, die als Wollekuchen hergerichtet und über einen Nagelstuhl verwebt wurden. Anschließend erfolgt in einer Presse ein Verbacken der Fasern unter Einwirkung von Druck und Hitze und eine Komprimierung des aus den Fasern erzeugten Wollekuchens. Das Verbacken erfolgt vorzugsweise durch ein Auf- und/oder Anschmelzen der Polypropylenfasern und ein anschließendes Verkleben dieser untereinander und mit den Glasfasern beim Komprimieren des Wollekuchens zu einer Platte. Zusätzliche Klebemittel werden vorzugsweis nicht verwendet.

In diesem Fall hatte die Ausgangsmatte vor dem Verbacken eine Stärke von ca. 7,9 mm. Beim Verbacken, d. h. unter Einwirkung von Wärme und Druck, erfolgte eine Verdichtung auf eine Stärke von 4,5 mm.

Die Oberflächen 2a, 2b der Trägerplatte 2 werden durch zwei Kunststofffilme 3 gebildet, die beim Herstellen der Platte mit den Kunststofffasern und Glasfasern verbacken werden. Die Kunststofffilme 3 sind vorzugsweise aus dem gleichen Kunststoff wie die Kunststofffasern des Wollekuchens. Der Kunststofffilm 3 dient der besseren Verklebung mit weiteren Oberflächenschichten.

Weiter zeigt Figur 1 eine Oberflächenbeschichtung 14 auf der Vorderseite 12 der Trägerplatte 2. Die Oberflächenbeschichtung 14 umfasst eine Finishfolie 5, die mit einem Heißkleber 4 auf die Oberfläche 2a (hier durch den Kunststofffilm 3 gebildet) der Trägerplatte 2 geklebt wurde. Die Verklebung erfolgte in einer Kaschieranlage (hier nicht dargestellt). Die Finishfolie 5 ist über die Kleberschicht 4 vollflächig mit der Trägerplatte 1 verklebt.

Die Finishfolie 5 ist zumindest weitestgehend vollständig gefüllt. Die Füllung erfolgte mittels einer Vorimprägnierung mit Kunstharz (hier nicht dargestellt), hier Melamin, das bereits vor dem Verkleben in die Finishfolie eingebracht wurde und einem nach dem Aufkleben der Finishfolie 5 auf die Trägerplatte 2 eingetragenen Fülllack (hier nicht dargestellt).

Die Finishfolie 5 umfasst ein Dekorpapier, auf dem ein Farbdekor (hier nicht dargestellt), bspw. ein Holzdekor, aufgedruckt ist. Der Aufdruck des Farbdekors erfolgte bereits vor der Vorimprägnierung mit Kunstharz.

Weiter umfasst die Oberflächenbeschichtung 14 eine auf der Finishfolie 5 aufgetragene Grundierlackschicht 6, eine auf die Grundierlackschicht 6 aufgetragene erste Decklackschicht 7 und eine auf die erste Decklackschicht 7 aufgetragene zweite Decklackschicht 8.

Die Grundierlackschicht 6 wurde nach dem Trocknen des Fülllacks vollflächig auf die Finishfolie 5 aufgetragen. Auf der Grundierlackschicht 6 ist ebenfalls vollflächig die erste Decklackschicht 7 und auf der ersten Decklackschicht 7 abschnittsweise die zweite Decklackschicht 8 aufgetragen, die ein Strukturdekor ausbildet.

Die Grundierlackschicht 6 wurde vor dem Auftrag der ersten Decklackschicht 7 nur angeliert, jedoch nicht vollständig ausgehärtet. Ebenso wurde auch die erste Decklackschicht 7 nur angeliert, bevor die zweite Decklackschicht 8 auf die erste Decklackschicht 7 aufgetragen wurde. Anschließend erfolgte gemeinsam die vollständige Aushärtung der Grundierlackschicht 6, der ersten Decklackschicht 7 und der zweiten Decklackschicht 8 unter Einwirkung von UV-Licht.

Das von der zweiten Decklackschicht 8 gebildet Strukturdekor ist synchron zu dem Farbdekor angeordnet und bildet Synchronporen aus.

An den Seitenkanten 13 der Paneele 1 sind zudem korrespondierende Verriegelungsprofile 10 angeordnet, die zum klebemittellosen Verbinden mit weiteren Paneelen ausgebildet sind und im verriegelten Zustand eine klebemittelfreie, lückenlose und absatzlose Verbindung zwischen zwei Paneelen herstellen.

An der der Vorderseite 12 gegenüberliegenden Rückseite 11 ist zudem eine Trittschalldämmung 9 aus einem Biopolymer vorgesehen. Die Trittschalldämmung 9 wurde ebenfalls mittels eines Heißklebers 4 auf die Oberfläche 2b der Rückseite 11 Trägerplatte 2 geklebt. Die Oberfläche 2b der Rückseite 11 der Trägerplatte 2 wird wie auch die Vorderseite 2a durch einen Kunststofffilm 3 gebildet, der beim Herstellen der Trägerplatte 2 mit verbacken wurde.

Sowohl die Oberflächenbeschichtung 14 als auch die Trittschalldämmung 9 wurden in einer Kaschieranlage (hier nicht dargestellt) mit den Oberflächen 2a, 2b der Trägerplatte 2 mittels des Heizklebers 3 verklebt. Die Verklebung erfolgte hier gleichzeitig, d. h., dass sowohl die Oberflächenbeschichtung 14 als auch die Trittschalldämmung 9 gleichzeitig in einem Kaschierschritt mit der Trägerplatte 2 verklebt wurden. Selbstverständlich können die Oberflächenbeschichtung 14 und Trittschalldämmung 9 auch nacheinander mit der Oberfläche 2a, 2b verklebt werden.

### Bezugszeichenliste

- 1: Paneel
- 2: Trägerplatte
- 2a: Oberfläche Trägerplatte
- 2b: Oberfläche Trägerplatte
- 3: Kunststofffilme
- 4: Heißkleber
- 5: Finishfolie
- 6: Grundierlackschicht
- 7: Erste Decklackschicht
- 8: Zweite Decklackschicht
- 9: Trittschalldämmung
- 10: Verriegelungsprofile
- 11: Rückseite
- 12: Vorderseite
- 13: Seitenkanten
- 14: Oberflächenbeschichtung

## Patentansprüche

1. Verfahren zum Herstellen eines wasserfesten Fußbodenpaneels mit einer wasserfesten Trägerplatte (2) und einer auf der Trägerplatte (2) angeordneten Oberflächenbeschichtung (14),
**gekennzeichnet durch** die Schritte:
- Verkleben einer vorimprägnierten Finishfolie (5) mit der Trägerplatte (2),
- Füllen der Finishfolie (5) mit einem Fülllack,
- Auftragen und Angelieren einer Schicht eines lösemittelhaltigen Grundierlacks (6) auf die Finishfolie (5),
- Auftragen und Angelieren mindestens einer Schicht eines lösemittelhaltigen Decklacks (7) auf die Grundierlackschicht (6)
- vollständiges Aushärten der Grundierlackschicht (6) und der Decklackschicht (7).

2. Verfahren nach Anspruch 1, **dadurch gekennzeichnet, dass** vor dem vollständigen Aushärten eine weitere Decklackschicht (8) aufgetragen wird, die ein Strukturdekor ausbildet.

3. Verfahren nach einem der vorhergehenden Ansprüche, **dadurch gekennzeichnet, dass** die Finishfolie (5) mit der Oberfläche (2a) der Trägerplatte (2) mittels eines Heizklebers (4) verklebt wird.

4. Verfahren nach einem der vorhergehenden Ansprüche, **dadurch gekennzeichnet, dass** die Vorimprägnierung der Finishfolie (5) eine Kunstharzfüllung zwischen 10 Gew.-% und 30 Gew.-%, insbesondere 25 Gew.-% +/-5% Gew.-% umfasst.

5. Verfahren nach einem der vorhergehenden Ansprüche, **dadurch gekennzeichnet, dass** als Fülllack ein wasserbasierter UV-Lack verwendet wird.

6. Verfahren nach einem der vorhergehenden Ansprüche, **dadurch gekennzeichnet, dass** eine Grundierlackschicht (6) und eine erste und zweite Decklackschicht (7,8) verwendet werden, die ohne die Abriebfestigkeit steigernde Mittel, insbesondere ohne Korund, Glas, Sand ausgebildet sind.

7. Verfahren nach einem der vorhergehenden Ansprüche, **dadurch gekennzeichnet, dass** auf die der Oberflächenbeschichtung (14) gegenüberliegende Oberfläche (2b) eine Trittschalldämmung (9) geklebt wird.

8. Verfahren nach einem der vorhergehenden Ansprüche, **dadurch gekennzeichnet, dass** die Trittschalldämmung (9) aufkaschiert wird, insbesondere gleichzeitig mit der Finishfolie (5).

9. Fußbodenpaneel mit
- einer wasserfesten Trägerplatte (2), die ein verdichtetes Polypropylenfaser-Glasfaser-Gemisch und eine mit der Trägerplatte (2) verklebte Oberflächenbeschichtung (14) umfasst,
**dadurch gekennzeichnet, dass**
- die Oberflächenbeschichtung (14) eine mit der Trägerplatte (2) verklebte und mit einem Farbdekor bedruckte Finishfolie (5) mit einer Kunstharzfüllung und eine wasserbasierte UV-Lackfüllung aufweist, wobei
- auf die Finishfolie (5) eine lösemittelbasierte UV-Grundierlackschicht (6) und eine erste lösemittelbasierte UV-Decklackschicht (7) aufgetragen und ausgehärtet sind.

10. Fußbodenpaneel nach Anspruch 9, **dadurch gekennzeichnet, dass** auf der ersten Decklackschicht (7) eine zweite Decklackschicht (8) angeordnet ist, die insbesondere ein Strukturdekor ausbildet.

11. Fußbodenpaneel nach Anspruch 10, **dadurch gekennzeichnet, dass** die zweite Decklackschicht (8) mit einer Auftragsmenge von 1,5 g/m² +/-0,5 g/m² angeordnet ist, wobei die zweite Decklackschicht (8) insbesondere abschnittsweise auf der ersten Decklackschicht (7) aufgetragen ist.

12. Fußbodenpaneel nach einem der Ansprüche 9 oder 11, **dadurch gekennzeichnet, dass** die Oberflächenbeschichtung (14) frei von Mitteln ist, die die Abriebfestigkeit steigern, insbesondere ohne Korund, Glas, Sand ausgebildet ist.

13. Fußbodenpaneel nach einem der Ansprüche 9 bis 12, **dadurch gekennzeichnet, dass** auf der der Oberflächenbeschichtung (14) gegenüberliegenden Oberfläche (2b) der Trägerplatte (2) eine Trittschalldämmung (9) angeordnet ist, die insbesondere ein Biopolymer umfasst.

14. Fußbodenpaneel nach Anspruch 13, **dadurch gekennzeichnet, dass** das Biopolymer bei einer Dicke von 1,8 mm Dicke und einer Dichte von 384 Kg/m³ eine Trittschallminderung von 22 dB aufweist.

15. Fußbodenpaneel nach einem der Ansprüche 9 bis 14, **dadurch gekennzeichnet, dass** an Außenkanten (13) des Paneels (1) korrespondierende Verriegelungsprofile (10) zum Verbinden von zwei Paneelen (1) angeordnet sind.

## Claims

1. A method for producing a waterproof floor panel having a waterproof carrier plate (2) and a surface coating (14) arranged on the carrier plate (2),
**characterized by** the steps of:
- bonding a pre-impregnated finish film (5) to the carrier plate (2),
- filling the finish film (5) with a filling lacquer,
- applying and gelling a layer of a solvent-containing primer (6) to the finish film (5),
- applying and gelling at least one layer of a solvent-containing top-coat lacquer (7) to the primer layer (6),
- completely curing the primer layer (6) and the top-coat lacquer layer (7).

2. The method according to claim 1, **characterized in that** a further top-coat lacquer layer (8) which forms a structural decoration is applied prior to complete curing.

3. The method according to one of the preceding claims, **characterized in that** the finish film (5) is bonded to the surface (2a) of the carrier plate (2) by means of a hot glue (4).

4. The method according to one of the preceding claims, **characterized in that** the pre-impregnation of the finish film (5) comprises a synthetic resin filling between 10 wt.% and 30 wt.%, in particular 25 wt.% +/- 5 wt.%.

5. The method according to one of the preceding claims, **characterized in that** a water-based UV lacquer is used as the filling lacquer.

6. The method according to one of the preceding claims, **characterized in that** a primer layer (6) and a first and second top-coat lacquer layer (7, 8) are used, which are formed without agents which increase scuff resistance, in particular without corundum, glass, sand.

7. The method according to one of the preceding claims, **characterized in that** a footfall sound insulation (9) is glued onto the surface (2b) opposite the surface coating (14).

8. The method according to one of the preceding claims, **characterized in that** the footfall sound insulation (9) is laminated on, in particular at the same time as the finish film (5).

9. A floor panel having
- a waterproof carrier plate (2) which comprises a compacted polypropylene fiber-glass fiber mixture and a surface coating (14) bonded to the carrier plate (2),
**characterized in that**
- the surface coating (14) has a finish film (5) bonded to the carrier plate (2) and printed with a colored decoration and which has a synthetic resin filling, and a water-based UV lacquer filling, wherein
- a solvent-based UV primer layer (6) and a first solvent-based UV top-coat lacquer layer (7) are applied to the finish film (5) and cured.

10. The floor panel according to claim 9, **characterized in that** a second top-coat lacquer layer (8) is arranged on the first top-coat lacquer layer (7), which second top-coat lacquer layer in particular forms a structural decoration.

11. The floor panel according to claim 10, **characterized in that** the second top-coat lacquer layer (8) is arranged with an application quantity of 1.5 g/m² +/-0.5 g/m², wherein the second top-coat lacquer layer (8) is applied, in particular in sections, to the first top-coat lacquer layer (7).

12. The floor panel according to one of claims 9 or 11, **characterized in that** the surface coating (14) is free of agents which increase the scuff resistance, in particular without corundum, glass, sand.

13. The floor panel according to one of claims 9 to 12, **characterized in that** a footfall sound insulation (9), which in particular comprises a biopolymer, is arranged on the surface (2b) of the carrier plate (2) opposite the surface coating (14).

14. The floor panel according to claim 13, **characterized in that** the biopolymer, with a thickness of 1.8 mm and a density of 384 kg/m³, has a footfall sound reduction of 22 dB.

15. The floor panel according to one of claims 9 to 14, **characterized in that** corresponding locking profiles (10) for connecting two panels (1) are arranged at outer edges (13) of the panel (1).

## Revendications

1. Procédé de fabrication d'un panneau de plancher résistant à l'eau avec une plaque de support (2) résistante à l'eau et un revêtement de surface (14) disposé sur la plaque de support (2),
**caractérisé par** les étapes suivantes :
- le collage d'une feuille de finition (5) préimprégnée à la plaque de support (2),
- le garnissage de la feuille de finition (5) avec un vernis garnissant,
- l'application et la prégélification d'une couche d'un vernis d'apprêt (6) contenant des solvants sur la feuille de finition (5),
- l'application et la prégélification d'au moins une couche d'un vernis de finition (7) contenant des solvants sur la couche de vernis d'apprêt (6),
- le durcissement complet de la couche de vernis d'apprêt (6) et de la couche de vernis de finition (7).

2. Procédé selon la revendication 1, **caractérisé en ce qu'**une autre couche de vernis de finition (8), qui constitue un décor structuré, est appliquée avant le durcissement complet.

3. Procédé selon l'une des revendications précédentes, **caractérisé en ce que** la feuille de finition (5) est collée à la surface (2a) de la plaque de support (2) au moyen d'une colle chaude.

4. Procédé selon l'une des revendications précédentes, **caractérisé en ce que** la préimprégnation de la feuille de finition (5) comprend un garnissage de résine synthétique représentant entre 10 % en poids et 30 % en poids, en particulier 25 % en poids +/- 5 % en poids.

5. Procédé selon l'une des revendications précédentes, **caractérisé en ce qu'**un vernis UV à base d'eau sert de vernis garnissant.

6. Procédé selon l'une des revendications précédentes, **caractérisé en ce qu'**une couche de vernis d'apprêt (6) et une première et seconde couche de vernis de finition (7, 8) sont utilisées, qui sont constituées sans agents augmentant la résistance à l'abrasion, notamment sans corindon ni verre ni sable.

7. Procédé selon l'une des revendications précédentes, **caractérisé en ce qu'**une isolation contre les bruits de pas (9) est collée sur la surface (2b) opposée au revêtement de surface (14).

8. Procédé selon l'une des revendications précédentes, **caractérisé en ce que** l'isolation contre les bruits de pas (9) est contrecollée, en particulier simultanément avec la feuille de finition (5).

9. Panneau de plancher avec
- une plaque de support (2) résistante à l'eau, qui comprend un mélange comprimé de fibres de verre-fibres de polypropylène et un revêtement de surface (14) collé à la plaque de support (2),
**caractérisé en ce que**
- le revêtement de surface (14) présente une feuille de finition (5) imprimée avec un décor en couleur et collée à la plaque de support (2) avec un garnissage de résine synthétique et un garnissage de vernis UV à base d'eau, dans lequel
- une couche de vernis d'apprêt UV (6) à base de solvants et une première couche de vernis de finition UV (7) à base de solvants sont appliquées et durcies sur la feuille de finition (5).

10. Panneau de plancher selon la revendication 9, **caractérisé en ce qu'**une seconde couche de vernis de finition (8), qui constitue en particulier un décor structuré, est enduite sur la première couche de vernis de finition (7).

11. Panneau de plancher selon la revendication 10, **caractérisé en ce que** la seconde couche de vernis de finition (8) est enduite avec une masse surfacique de 1,5 g/m² +/- 0,5 g/m², dans lequel la seconde couche de vernis de finition (8) est appliquée notamment par endroits sur la première couche de vernis de finition (7).

12. Panneau de plancher selon l'une des revendications 9 ou 11, **caractérisé en ce que** le revêtement de surface (14) est exempt d'agents augmentant la résistance à l'abrasion, qu'il est constitué notamment sans corindon ni verre ni sable.

13. Panneau de plancher selon l'une des revendications 9 à 12, **caractérisé en ce qu'**une isolation contre les bruits de pas (9), qui comprend en particulier un biopolymère, est disposée sur la surface (2b) de la plaque de support (2) opposée au revêtement de surface (14).

14. Panneau de plancher selon la revendication 13, **caractérisé en ce que** le biopolymère présente une atténuation des bruits de pas de 22 dB pour une épaisseur de 1,8 mm et une densité de 384 kg/m³.

15. Panneau de plancher selon l'une des revendications 9 à 14, **caractérisé en ce que** des profilés de blocage (10) correspondants sont disposés sur les arêtes extérieures (13) du panneau (1) pour assembler deux panneaux (1).
